# EUROPÄISCHE PATENTSCHRIFT

(11) **EP 4 334 110 B1**
(45) Veröffentlichungstag und Bekanntmachung des Hinweises auf die Patenterteilung: **31.12.2025**
(21) Anmeldenummer: 22727841.3
(22) Anmeldetag: 04.05.2022
(51) Int. Cl.: B29C 51/16, B65D 5/56, B65B 3/02, B29K 311/10, B29C 51/08, B29C 51/42, B65D 5/20, B29L 31/00, B31B 120/40

(54) **VERFAHREN ZUR HERSTELLUNG EINER KARTON-KUNSTSTOFF-VERBUNDSCHALE UND HERSTELLUNGSVORRICHTUNG**
METHOD FOR PRODUCING A CARDBOARD-PLASTIC COMPOSITE SHELL, AND PRODUCTION DEVICE
PROCÉDÉ DE FABRICATION D'UNE COQUE COMPOSITE CARTON-PLASTIQUE ET DISPOSITIF DE FABRICATION

(30) Priorität: 04.05.2021 DE 102021111563
(43) Veröffentlichungstag der Anmeldung: 13.03.2024
(73) Patentinhaber: Syntegon Technology GmbH, 70372 Stuttgart (DE)
(72) Erfinder: SELINGER, Gebhard, 73547 Lorch (DE)
(74) Vertreter: Novagraaf Group
(86) Internationale Anmeldenummer: PCT/EP2022/062027
(87) Internationale Veröffentlichungsnummer: WO 2022/233962

(56) Entgegenhaltungen:
- EP-B1- 0 808 774
- WO-A1-00/75025
- CA-A1- 3 138 383
- DE-A1- 19 509 100
- US-A- 3 917 155

## Beschreibung

### Stand der Technik

Die Erfindung betrifft ein Verfahren zur Herstellung einer Karton-Kunststoff-Verbundschale nach dem Anspruch 1 und eine Herstellungsvorrichtung nach dem Anspruch 11.

In den Dokumenten US 10,647,466 B2 und US 2020/0247571 A1 ist bereits vorgeschlagen worden, dass eine Kunststofffolie in eine vorgefaltete Kartonbox einlaminiert wird. Um ein Einbringen der Kunststofffolie in die Kartonbox, und um ein flächiges, z.B. möglichst blasenfreies, Auskleiden der Kartonbox mit der Kunststofffolie zu ermöglichen, weist die Kartonbox in Kantenbereichen Entlüftungslöcher auf, durch die Luft, welche beim Verbindungsprozess zwischen der Kunststofffolie und der Kartonbox eingesperrt wird, entweicht, bzw. sogar aktiv abgesaugt wird. Dies erfordert speziell ausgebildete Formwerkzeuge mit Belüftungsöffnungen und spezielle Kartonzuschnittgeometrien.

Des Weiteren sind aus EP0808774B1, DE 196 20 396 A1, DE 23 31 005 A1, DE 195 09 100 A1, US 3 917 155 A, CA 3 138 383 A1 und WO 00/75025 A1 bereits Verfahren zur Herstellung einer Karton-Kunststoff-Verbundschale bekannt, wobei die bereits bekannten Verfahren zumindest die nachfolgenden Verfahrensschritte aufweisen:
- Bereitstellen einer Kunststofffolie,
- Vorverformen der Kunststofffolie zur Ausbildung einer Schalenform,
- Bereitstellen eines Kartonzuschnitts,
- Verbinden des Kartonzuschnitts mit der bereits vorverformten Kunststofffolie zur

Ausbildung der Karton-Kunststoff-Verbundschale, die eine becherförmige Verpackung zur Aufnahme von Lebensmitteln bildet. Ebenso sind daraus bereits Herstellungsvorrichtungen zu einer Herstellung von Karton-Kunststoff-Verbundschalen gemäß den bekannten Verfahren sowie die mittels der bereits bekannten Verfahren hergestellten Karton-Kunststoff-Verbundschalen bekannt.

### Offenbarung der Erfindung

Die Erfindung geht aus von einem Verfahren zur Herstellung einer Karton-Kunststoff-Verbundschale, insbesondere einer MAP (Modified Atmosphere Packaging)-Karton-Kunststoff-Verbundschale für Lebensmittel, aufweisend zumindest die Verfahrensschritte: a) Bereitstellen einer Kunststofffolie, b) Vorverformen der Kunststofffolie zur Ausbildung einer Schalenform, c) Bereitstellen eines Kartonzuschnitts und d) Verbinden des Kartonzuschnitts mit der bereits vorverformten Kunststofffolie zur Ausbildung der Karton-Kunststoff-Verbundschale.

Es wird vorgeschlagen, dass der bereitgestellte Kartonzuschnitt unmittelbar vor dem Verbinden mit der vorverformten Kunststofffolie ungefaltet oder unvollständig gefaltet ist, wobei bei dem Verbinden des Kartonzuschnitts mit der vorverformten Kunststofffolie der Kartonzuschnitt mittels eines Klappmechanismus und/oder mittels eines Stempelmechanismus auf die Kunststofffolie gefaltet wird. Dadurch kann vorteilhaft eine einfache, kostengünstige und/oder zügige Herstellung von Karton-Kunststoff-Verbundschalen erreicht werden, insbesondere indem bei der Herstellung auf ein Entlüften der aus dem Kartonzuschnitt geformten Kartonbox und/oder ein Absaugen von Luft aus der Kartonbox verzichtet werden kann.

Insbesondere besteht die Karton-Kunststoff-Verbundschale zumindest im Wesentlichen aus zwei Komponenten: dem Kartonzuschnitt und der Kunststofffolie. Insbesondere sind die beiden Komponenten der Karton-Kunststoff-Verbundschale flächig, und insbesondere frei von zusätzlich aufgebrachten Klebstoffen, miteinander verbunden, z.B. durch eine Presslaminierung. Der Kartonzuschnitt ist vorzugsweise aus einem Recyclingmaterial (Altpapier), aus einem frischen Zellstoff oder aus einem Holzschliff ausgebildet. Unter dem Begriff "Karton" sollen im Zusammenhang mit der hierin beschriebenen Erfindung alle möglichen Arten von Zellstoff- und/oder Papierprodukten verstanden werden (z.B. auch Pappe o.dgl.). Vorzugsweise weist der Karton des Kartonzuschnitts eine Grammatur zwischen 300 g/m² und 500 g/m², bevorzugt 360 g/m², auf. Der Kartonzuschnitt ist vorzugsweise frei von Klebelaschen o.dgl. Der Kartonzuschnitt ist insbesondere dazu vorgesehen, eine schalenförmige Box auszubilden und/oder zu einer schalenförmigen Box gefaltet zu werden. Die aus dem Kartonzuschnitt ausgebildete schalenförmige Box stellt vorzugsweise eine physische Barriere gegen eine Beschädigung eines Inhalts der Karton-Kunststoff-Verbundschale und/oder gegen eine Beschädigung einer durch die Kunststofffolie gebildeten (Gas- und/oder Feuchtigkeits-) Barriereschicht dar. Die aus dem Kartonzuschnitt ausgebildete schalenförmige Box bildet eine Außenseite der Karton-Kunststoff-Verbundschale aus. Die Kunststofffolie bildet eine Innenseite der Karton-Kunststoff-Verbundschale aus. Unter einer MAP-Karton-Kunststoff-Verbundschale soll insbesondere eine Karton-Kunststoff-Verbundschale verstanden werden, welche dazu ausgelegt ist, in einem Verpackungsvorgang verwendet zu werden, bei dem während eines Schließprozesses eine gezielte Veränderung einer Gaszusammensetzung im Inneren einer gasdichten Verpackung vorgenommen wird. Insbesondere ist die Karton-Kunststoff-Verbundschale durch ein gasdichtes/luftdichtes Aufbringen eines gasdichten/luftdichten Deckels vollständig gasdicht/luftdicht verschließbar.

Insbesondere wird die Kunststofffolie in dem Schritt a) in einer ebenen Form bereitgestellt. Vorzugsweise soll unter einer Kunststofffolie ein dünnes Blatt aus einem Kunststoff verstanden werden, welches insbesondere zunächst in Endlosbahnen gefertigt, aufgerollt und später in passende Stücke geschnitten wird. Vorzugsweise weist die Kunststofffolie eine Stärke zwischen 40 µm und 100 µm, bevorzugt 60 µm, auf. Insbesondere weist die Kunststofffolie eine Siegelfähigkeit auf, so dass die Karton-Kunststoff-Verbundschale nach einem Befüllen (z.B. durch eine Deckfolie) verschließ- und/oder versiegelbar ist. Vorzugsweise ist die Kunststofffolie dehnbar, bevorzugt um zumindest 50 % zerstörungsfrei/rissfrei dehnbar. Vorzugsweise ist die Kunststofffolie aus einem Kunststoff mit einer hohen Barrierewirkung für Wasserdampf, Sauerstoff, Stickstoff und/oder weitere gasförmige Stoffe ausgebildet. Beispielsweise ist die Kunststofffolie aus einem Polyethylen (PE / LDPE), insbesondere aus einem PE mit einer Ethylen-Vinylalkohol-Copolymer (EVOH)-Trennschicht, aus einem Polypropylen (PP) ausgebildet. Es ist zudem denkbar, dass die Kunststofffolie aus einem biodegradablen Kunststoffmaterial ausgebildet ist. Insbesondere ist die Kunststofffolie einschichtig ausgebildet. Vorzugsweise ist die Kunststofffolie keine Verbundfolie aus mehreren verschiedenen Kunststoffen, insbesondere Kunststoffen verschiedener Klassen. Es ist jedoch denkbar, dass die Kunststofffolie eine Verbundfolie ist, deren Bestandteile einer gemeinsamen Kunststoffklasse angehören, welche insbesondere gemeinsam recyclebar sind, d.h. z.B. eine Verbundfolie aus Schichten verschiedener PE-Kunststofftypen. Insbesondere wird bei dem Bereitstellen eine ebene Kunststofffolienbahn von einer Rolle abgewickelt und in einen Rahmen eingespannt. Insbesondere wird der in dem Rahmen angeordnete Bereich der Kunststofffolienbahn bei dem Vorverformen verformt. Insbesondere findet das Vorverformen vor einem Zusammenbringen der Kunststofffolie mit dem Kartonzuschnitt statt. Insbesondere wird zunächst die Kunststofffolie vorverformt und danach mit dem (ungefalteten oder nur teilweise gefalteten) Kartonzuschnitt in Verbindung gebracht. Unter einer Schalenform soll insbesondere jede Form verstanden werden, die einen Boden aufweist und die von dem Boden ausgehende um 360° umlaufende Seitenwände zur Ausbildung eines Aufnahmeraums aufweist. Insbesondere sollen im Zusammenhang mit der hierin beschriebenen Erfindung auch eine Schüsselform, eine Tellerform, eine Becherform und weitere Behälterformen mit Zugangsöffnung als erfindungsgemäße Schalenformen verstanden werden. Vorzugsweise weisen die Seitenwände der Schalenform eine Höhe von wenigstens 5 %, vorzugsweise wenigstens 10 % oder bevorzugt wenigstens 20 % einer Breite oder einer Tiefe des Bodens der Schalenform auf. Insbesondere beträgt eine Länge einer kürzesten Seitenkante eines kleinsten geometrischen Quaders, welcher die fertiggestellte Karton-Kunststoff-Verbundschale gerade noch vollständig umschließt, wenigstens 5 %, vorzugsweise wenigstens 10 % oder bevorzugt wenigstens 20 % einer Länge einer längsten Seitenkante des kleinsten geometrischen Quaders, welcher die fertiggestellte Karton-Kunststoff-Verbundschale gerade noch vollständig umschließt.

Insbesondere wird der Kartonzuschnitt in einer ebenen Form bereitgestellt. Insbesondere ist der Kartonzuschnitt derart ausgebildet, dass er nach einer Faltung eine Schalenform ausbildet, welche vorzugsweise zumindest auf einer Innenseite der Schalenform der vorverformten Kunststofffolie zumindest im Wesentlichen entspricht. Insbesondere wird zumindest ein Abschnitt des Kartonzuschnitts mit der Kunststofffolie verbunden, bevor der Kartonzuschnitt vollständig gefaltet ist / bevor der Kartonzuschnitt in seine Endform gefaltet ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass der Kartonzuschnitt mit der Kunststofffolie derart verbunden wird, dass Kunststofffolie und Kartonzuschnitt manuell, und insbesondere recyclingfähig, trennbar sind. Dadurch kann vorteilhaft eine hohe Umweltverträglichkeit erreicht werden. Insbesondere ist die Kunststofffolie von dem Karton (manuell) abziehbar. Bevorzugt ist die Kunststofffolie derart von dem Karton des Kartonzuschnitts trennbar / abziehbar, dass nach einer Trennung von Kunststofffolie und Karton der Karton zumindest im Wesentlichen frei ist von Folienrückständen und die Kunststofffolie zumindest im Wesentlichen frei ist von Kartonrückständen. Dadurch kann vorteilhaft eine hohe Recyclingfähigkeit der Karton-Kunststoff-Verbundschale erreicht werden. Vorzugsweise sind der Kartonzuschnitt und die Kunststofffolie zur Ermöglichung der manuellen Trennbarkeit frei von zusätzlich aufgebrachten Klebstoffen miteinander verbunden. Insbesondere weist die Kunststofffolie der fertigen Karton-Kunststoff-Verbundschale zumindest eine Lasche oder einen Überstand auf, welcher zu einem Abziehen der Kunststofffolie von dem Karton des Kartonzuschnitts gegriffen werden kann.

Zudem wird vorgeschlagen, dass die Kunststofffolie mit dem Kartonzuschnitt durch Laminieren verbunden wird. Dadurch kann vorteilhaft eine gute Trennbarkeit von Kunststofffolie und Karton erreicht werden, wodurch eine hohe Recyclingfähigkeit und/oder Umweltverträglichkeit sichergestellt werden kann. Zudem kann vorteilhaft ein einfaches und bevorzugt durch eine Klebstofffreiheit umweltverträgliches Herstellungsverfahren erreicht werden. Insbesondere wird die Kunststofffolie mit dem Karton des Kartonzuschnitts durch ein Heißlaminieren und/oder durch ein Presslaminieren, vorzugsweise durch eine Kombination aus Heiß- und Presslaminieren, verbunden. Unter einem "Laminieren" soll insbesondere ein stoffschlüssiges, vorzugsweise thermisches und/oder durch Druck erzeugtes, Fügeverfahren verstanden werden, welches ohne eine Verwendung von Hilfsmaterialien, wie Klebstoffen o.ä. auskommt. Alternativ zu dem Heiß- oder Presslaminieren und/oder alternativ zur Kombination aus Heiß- und Presslaminieren ist auch denkbar, dass die Kunststofffolie mit dem Karton des Kartonzuschnitts durch ein Kaltlaminieren verbunden wird. Vorzugsweise wird, insbesondere beim Kaltlaminieren, in zumindest einem Verfahrensschritt ein Kaltsiegelmedium auf der Kunststofffolie und/oder auf dem Karton des Kartonzuschnitts aufgebracht. Bevorzugt wird in zumindest einem Verfahrensschritt, insbesondere beim Kaltlaminieren nach dem Aufbringen des Kaltsiegelmediums, die Kunststofffolie und der Karton des Kartonzuschnitts mittels eines Andrückens, insbesondere mittels eines Aufeinanderpressens, verbunden. Durch die Verwendung von einem Kaltsiegelmedium kann vorteilhaft auf eine spezielle Heißsiegelschicht auf der Kunststofffolie verzichtet werden. Es kann vorteilhaft eine weitestgehende Unabhängigkeit von Temperaturfenstern, während denen die Kunststofffolie verformt wird und/oder während denen ein Heißsiegelvorgang stattfindet, erreicht werden. Es kann vorteilhaft eine weitestgehende Unabhängigkeit von der zu verbindenden Kunststofffolie sowie einer Oberfläche des Kartons des Kartonzuschnitts erreicht werden, so dass unterschiedlichste Arten von Kartons für das Verfahren nutzbar sind, insbesondere da beispielsweise eine Kunststofffolie, die zu einem Heißlaminieren vorgesehen ist, sich bei grobem Graukarton anders verhält als bei einem Karton mit einer gestrichenen/lackierten/bedruckten Oberfläche.

Außerdem wird vorgeschlagen, dass eine Formstabilität der Karton-Kunststoff-Verbundschale durch die mit dem Karton des Kartonzuschnitts durch Laminieren verbundene Kunststofffolie erzeugt wird. Dadurch kann vorteilhaft ein einfaches und bevorzugt durch eine Klebstofffreiheit umweltverträgliches Herstellungsverfahren erreicht werden. Zudem kann vorteilhaft ein Gesamtmaterialverbrauch gering gehalten werden, wodurch insbesondere Kosten gesenkt werden können. Insbesondere werden die einzelnen Seitenwände des Kartonzuschnitts durch die Kunststofffolie in der vorgesehenen Faltposition gehalten.

Des Weiteren wird vorgeschlagen, dass die Kunststofffolie bei dem Vorverformen in eine Form gebracht, insbesondere gezogen, wird, die zumindest im Wesentlichen einer zu erzielenden Innenform der Karton-Kunststoff-Verbundschale entspricht. Dadurch kann vorteilhaft eine einfache, kostengünstige und/oder zügige Herstellung von Karton-Kunststoff-Verbundschalen erreicht werden. Insbesondere wird bei dem Vorverformen ein als Stempelwerkzeug ausgebildetes Formwerkzeug in den Rahmen, der die Kunststofffolie festhält, eingedrückt.

Wenn die Kunststofffolie bei dem Vorverformen oder unmittelbar vor dem Vorverformen aufgeheizt wird, kann vorteilhaft der Vorverformprozess optimiert werden. Insbesondere wird dadurch eine Plastizität der Kunststofffolie erhöht. Insbesondere wird die Kunststofffolie in dem Vorverformprozess auf Temperaturen zwischen 80°C und 170°C erhitzt.

Zusätzlich wird vorgeschlagen, dass bei dem Verbinden des Kartonzuschnitts mit der vorverformten Kunststofffolie ein für eine Ausbildung eines Bodens der Karton-Kunststoff-Verbundschale vorgesehener Teilbereich des Kartonzuschnitts, insbesondere zeitlich, vor einem für eine Ausbildung einer Seitenwand der Karton-Kunststoff-Verbundschale vorgesehener Teilbereich des Kartonzuschnitts mit der Kunststofffolie verbunden wird. Dadurch kann vorteilhaft eine einfache, kostengünstige und/oder zügige Herstellung von Karton-Kunststoff-Verbundschalen erreicht werden, insbesondere indem bei der Herstellung auf ein Entlüften der aus dem Kartonzuschnitt geformten Kartonbox und/oder ein Absaugen von Luft aus der Kartonbox verzichtet werden kann.

Vorteilhaft entweicht bei dem Faltprozess die Luft zwischen Kunststofffolie und Karton des Kartonzuschnitts ohne Hilfsmittel oder Belüftungslöcher.

Wenn, erfindungsgemäß bei dem Verbinden des Kartonzuschnitts mit der vorverformten Kunststofffolie der Kartonzuschnitt mittels eines Klappmechanismus und/oder mittels des Stempelmechanismus auf die vorgeformte Kunststofffolie gefaltet wird, kann vorteilhaft eine einfache, kostengünstige und/oder zügige Herstellung von Karton-Kunststoff-Verbundschalen erreicht werden, bei der insbesondere während des Faltprozesses die Luft zwischen der Kunststofffolie und dem Karton des Kartonzuschnitts ohne zusätzliche Hilfsmittel oder Belüftungslöcher entweicht. Insbesondere werden bei dem Falten des Kartonzuschnitts auf die vorgeformte Kunststofffolie die für die Ausbildung der Seitenwände der Karton-Kunststoff-Verbundschale vorgesehenen Teilbereiche des Kartonzuschnitts aus der Ebene des für die Ausbildung des Bodens der Karton-Kunststoff-Verbundschale vorgesehenen Teilbereichs des Kartonzuschnitts herausgefaltet.

Wenn zudem insbesondere bei dem Verbinden des Kartonzuschnitts mit der vorverformten Kunststofffolie, der Kartonzuschnitt derart gefaltet wird, dass der gefaltete Kartonzuschnitt frei bleibt von Überschneidungen und/oder Überlappungen mit sich selbst und mit weiteren Kartonzuschnitten, kann vorteilhaft ein besonders geringer Ressourcenverbrauch erzielt werden. Zudem kann dadurch vorteilhaft eine ebene Siegelfläche erzeugt werden, auf die eine Deckfolie o.ä. dicht aufgebracht werden kann.

In diesem Zusammenhang wird vorgeschlagen, dass bei dem Falten des Kartonzuschnitts ein, insbesondere rund um eine Schalenöffnung der fertigen Karton-Kunststoff-Verbundschale verlaufender, ebener und/oder lagensprungfreier Siegelrand erzeugt wird. Dadurch ist die Karton-Kunststoff-Verbundschale vorteilhaft dicht versiegelbar. Insbesondere ist die Schalenöffnung gegenüberliegend zu dem Boden der Karton-Kunststoff-Verbundschale angeordnet. Insbesondere verläuft der Siegelrand des fertig zu der Box gefalteten Kartonzuschnitts, vorzugsweise eine Siegelebene des Siegelrands des fertig zu der Box gefalteten Kartonzuschnitts, zumindest im Wesentlichen parallel zu dem Boden des fertig zu der Box gefalteten Kartonzuschnitts, insbesondere der Karton-Kunststoff-Verbundschale. Insbesondere wird die Karton-Kunststoff-Verbundschale im Anschluss an eine Befüllung durch ein Aufbringen der Deckfolie und ein Wärmeverschweißen der Deckfolie mit der Kunststofffolie im Bereich des Siegelrands versiegelt. Die Deckfolie kann dabei aus einem zu der Kunststofffolie identischen oder von der Kunststofffolie verschiedenen Kunststoffmaterial ausgebildet sein.

Außerdem wird vorgeschlagen, dass zumindest die Verbindung des Kartonzuschnitts mit der Kunststofffolie und/oder zumindest das Erzeugen einer Box aus dem Kartonzuschnitt, vorzugsweise alle Verfahrensschritte des Verfahrens zur Herstellung der Karton-Kunststoff-Verbundschale, vollständig frei von einem Auftragen von zusätzlichen Klebstoffen ablaufen. Dadurch kann vorteilhaft eine einfache, kostengünstige und/oder zügige Herstellung von Karton-Kunststoff-Verbundschalen erreicht werden, welche insbesondere durch eine einfache Trennbarkeit von Kunststofffolie und Karton nach Gebrauch besonders gute Recyclingeigenschaften besitzen. Unter einem Klebstoff soll in diesem Zusammenhang ein von der Kunststofffolie und dem Karton verschiedener und/oder getrennt ausgebildeter Prozesswerkstoff, der beim Fügeverfahren Kleben zum Verbinden verschiedener Werkstoffe verwendet wird, verstanden werden. Eine Verwendung von Adhäsions- oder Haft-Kunststofffolien wird beispielsweise in diesem Zusammenhang nicht als Klebstoffeinsatz angesehen. Ein teilweises Aufschmelzen von Kunststofffolien bei einem Laminieren wird beispielsweise in diesem Zusammenhang nicht als Klebstoffeinsatz angesehen.

Ferner wird eine Herstellungsvorrichtung zu einer Herstellung von Karton-Kunststoff-Verbundschalen zumindest aus jeweils einer Kunststofffolie und jeweils einem Kartonzuschnitt mittels eines ein Vorverformen der Kunststofffolie und ein daran anschließendes Verbinden der Kunststofffolie mit dem Kartonzuschnitt aufweisenden erfindungsgemäßen Verfahrens, aufweisend eine Folienvorverformeinheit und eine Pressvorrichtung mit einem Stempelmechanismus, wobei die Folienvorverformeinheit zumindest ein Stempelwerkzeug mit einer Außenkontur, die zumindest im Wesentlichen einer zu erzielenden Innenkontur der fertigen Karton-Kunststoff-Verbundschale entspricht, aufweist, wobei der Stempelmechanismus ein zu dem Stempelwerkzeug komplementär ausgebildetes weiteres Stempelwerkzeug aufweist, das dazu vorgesehen ist, in einem gemeinsamen Arbeitsschritt zu falten und zu laminieren, und/oder aufweisend eine Folienvorverformeinheit und eine Pressvorrichtung mit einem Klappmechanismus, wobei der Klappmechanismus dazu vorgesehen ist, den Kartonzuschnitt zur Ausbildung und Laminierung von Seitenwänden zu falten, in dem der Klappmechanismus die Seitenwände ausbildenden Teilbereiche des Kartonzuschnitts auf die vorverformte Kunststofffolie presst, vorgeschlagen. Dadurch kann vorteilhaft eine einfache, kostengünstige und/oder zügige Herstellung von Karton-Kunststoff-Verbundschalen erreicht werden. Vorteilhaft kann dadurch bei der Herstellung auf ein Entlüften einer Kartonbox und/oder ein Absaugen von Luft aus der Kartonbox verzichtet werden. Die Folienvorverformeinheit ist insbesondere dazu vorgesehen, zunächst eine Vorverformung der ursprünglich ebenen Kunststofffolie vor einem Verbinden mit dem Kartonzuschnitt zu erzeugen.

Erfindungsgemäß wird vorgeschlagen, dass die Folienvorverformeinheit zumindest ein Stempelwerkzeug mit einer Außenkontur, die zumindest im Wesentlichen einer zu erzielenden Innenkontur der fertigen Karton-Kunststoff-Verbundschale entspricht, aufweist, wobei der Stempelmechanismus ein zu dem Stempelwerkzeug komplementär ausgebildetes weiteres Stempelwerkzeug aufweist, das dazu vorgesehen ist, in einem gemeinsamen Arbeitsschritt zu falten und zu laminieren. Dadurch kann eine effektive, kostengünstige und/oder einfache plastische Vorverformung der Kunststofffolie erreicht werden. Insbesondere umfasst die Folienvorverformeinheit den die Kunststofffolie eben aufspannenden Rahmen, in den das Stempelwerkzeug bei der Durchführung der Vorverformung eingedrückt / eingepresst wird. Insbesondere ist denkbar, dass das Stempelwerkzeug Entlüftungs- und/oder Vakuumierkanäle aufweist, welche vorzugsweise dazu vorgesehen sind, ein enges Anliegen der Kunststofffolie an das Stempelwerkzeug, zumindest bei einem an den Vorverformprozess anschließenden Verbindungsprozess, bei dem die Kunststofffolie auf den Karton des Kartonzuschnitts auflaminiert wird, zu gewährleisten.

Zusätzlich wird vorgeschlagen, dass die Folienvorverformeinheit zumindest eine Heizeinrichtung zu einer Erwärmung der Kunststofffolie vor und/oder während eines Vorverformens der Kunststofffolie aufweist. Dadurch kann ein effektives, kostengünstiges und/oder einfaches Herstellungsverfahren erreicht werden, insbesondere indem eine plastische Vorverforbarkeit der Kunststofffolie verbessert werden kann. Vorteilhaft kann durch eine Erwärmung der Kunststofffolie vor und/oder während des Vorverformens eine Dehnbarkeit der Kunststofffolie erhöht werden.

Wenn die Heizeinrichtung zumindest teilweise einstückig mit dem Stempelwerkzeug der Folienvorverformeinheit ausgebildet ist, kann vorteilhaft eine effektive Wärmeübertragung während des Vorverformprozesses gewährleistet werden. Alternativ oder zusätzlich kann die Heizeinrichtung ein oder mehrere weitere Heizelemente und/oder Heizgeräte aufweisen, die getrennt von dem Stempelwerkzeug ausgebildet sind. Insbesondere können diese Heizelemente und/oder Heizgeräte dazu vorgesehen sein, einen Heißluftstrom und/oder Wärmestrahlen auf die Kunststofffolie aufzubringen, insbesondere mit dem Ziel einer Erwärmung der Kunststofffolie vor und/oder während des Vorverformprozesses.

Ferner wird eine Karton-Kunststoff-Verbundschale vorgeschlagen, die mittels des erfindungsgemäßen Verfahrens und/oder mittels der erfindungsgemäßen Herstellungsvorrichtung hergestellt ist. Dadurch kann vorteilhaft eine besonders kostengünstige und/oder einfach und/oder zügig herstellbare Karton-Kunststoff-Verbundschale erhalten werden.

Zudem wird eine Karton-Kunststoff-Verbundschale mit einer Kunststofffolie und mit einem Kartonzuschnitt, der zu einer Box gefaltet ist, vorgeschlagen, wobei zumindest eine einen Lagerbereich ausbildende Innenseite der Box vollständig mit der Kunststofffolie derart ausgekleidet ist, dass die Kunststofffolie mit dem zu der Box gefalteten Kartonzuschnitt flächig, und insbesondere frei von einem zusätzlich aufgetragenen Klebstoff, verbunden ist, und wobei die aus dem Kartonzuschnitt gefaltete Box (im Unterschied zu den eingangs zitierten bekannten Karton-Kunststoff-Verbundschalen) zumindest in Eckbereichen der Box zumindest im Wesentlichen lückenfrei ist. Dadurch kann vorteilhaft eine besonders kostengünstige und/oder einfach und/oder zügig herstellbare Karton-Kunststoff-Verbundschale bereitgestellt werden. Vorteilhaft ist die Karton-Kunststoff-Verbundschale frei von Schwachstellen ausbildenden Karton-Lücken, z.B. in Eckbereichen der Box. Vorteilhaft kann dadurch ein besserer Schutz von in dem Lagerraum der Box angeordneten Produkten, wie z.B. verderblichen Lebensmitteln, erreicht werden. Vorzugsweise ist die Karton-Kunststoff-Verbundschale abgesehen von der Schalenöffnung vollständig lückenfrei. Darunter, dass ein Objekt lückenfrei ist soll insbesondere verstanden werden, dass das Objekt abgesehen von Spalttoleranzen zwischen benachbarten Seitenwänden und/oder abgesehen von Falzrillungen, Falznutungen, Falzschlitzungen und/oder Falzperforierungen lückenfrei ist. Insbesondere umfasst die Box einen Boden und Seitenwände. Vorzugsweise ist die Box kistenförmig (rechteckig) ausgebildet. Alternativ sind jedoch auch andere polygonale und/oder teilweise abgerundete Formen denkbar. Insbesondere ist die Box auf einer Seite geöffnet, insbesondere durch die Schalenöffnung. Insbesondere ist die Auskleidung durch die Kunststofffolie lückenfrei und zumindest flüssigkeitsdicht, vorzugsweise gasdicht. Unter einem Eckbereich soll insbesondere ein Bereich der Box verstanden werden, an welchem sich zwei Seitenkanten von gefalteten Seitenwänden und der Boden der Box treffen. Insbesondere ist der Kartonzuschnitt frei von Belüftungselementen, welche bei einer Herstellung der Karton-Kunststoff-Verbundschale zu einem Entweichen und/oder Absaugen von Luft aus einem Zwischenraum zwischen Kunststofffolie und Kartonzuschnitt vorgesehen sind. Insbesondere ist jedoch denkbar, dass der Kartonzuschnitt andere, insbesondere abseits der Eckbereiche angeordnete, Lücken oder Ausnehmungen aufweist, deren Hauptzweck eine Ausbildung eines Sichtfensters zur Ermöglichung eines Einblicks in die Innenseite der Karton-Kunststoff-Verbundschale ist.

Außerdem wird vorgeschlagen, dass zu einem Erreichen eines vorteilhaft geringen Ressourcenverbrauchs der zu der Box gefaltete Kartonzuschnitt frei ist von Überschneidungen und/oder Überlappungen mit sich selbst oder mit Teilen weiterer Kartonzuschnitte und/oder dass zu einer vorteilhaften Optimierung einer Recyclingfähigkeit der Karton-Kunststoff-Verbundschale die Kunststofffolie und der Karton des Kartonzuschnitts derart miteinander verbunden sind, dass ein einfaches manuelles Trennen von Kunststofffolie und Karton zu einer Zuführung der Kunststofffolie und des Kartons zu unterschiedlichen Recyclingströmen ermöglicht ist.

Weiterhin wird vorgeschlagen, dass zu einer vorteilhaften Ermöglichung einer dichten Versiegelbarkeit der zu der Box gefaltete Kartonzuschnitt einen um eine Öffnung der Box, insbesondere die Schalenöffnung, umlaufenden ebenen und/oder lagensprungfreien Siegelrand ausbildet. In diesem Fall wird zudem vorgeschlagen, dass der Siegelrand zumindest zu einem Großteil, vorzugsweise vollständig, von der Kunststofffolie bedeckt ist. Dadurch kann eine besonders gute Dichtigkeit gewährleistet werden und/oder eine einfache (rein thermische) Versiegelung ermöglicht werden. Insbesondere erstreckt sich die Auskleidung der Box über die Innenseite der Box hinaus bis über den Siegelrand.

Des Weiteren wird vorgeschlagen, dass der zu der Box gefaltete Kartonzuschnitt auf einer der Innenseite gegenüberliegenden, insbesondere dem Lagerbereich gegenüberliegenden, Außenseite zumindest zu einem Großteil, vorzugsweise vollständig, frei von einer Bedeckung durch eine Kunststofffolie oder dergleichen ausgebildet ist. Dadurch kann vorteilhaft ein Ressourcenverbrauch, insbesondere ein Kunststoffanteil, und damit auch Herstellungskosten gering gehalten werden.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination.

Es zeigen:
- Fig. 1: eine schematische perspektivische Ansicht einer aus einer Kunststofffolie und einem Kartonzuschnitt gebildeten Karton-Kunststoff-Verbundschale,
- Fig. 2: eine schematische Draufsicht auf den Kartonzuschnitt in ungefalteter Form,
- Fig. 3: eine schematische Darstellung einer Herstellungsvorrichtung zur Herstellung der Karton-Kunststoff-Verbundschale während eines Arbeitsschritts,
- Fig. 4: eine schematische Darstellung der Herstellungsvorrichtung während eines ersten weiteren Arbeitsschritts,
- Fig. 5: eine schematische Darstellung der Herstellungsvorrichtung während eines zweiten weiteren Arbeitsschritts,
- Fig. 6: eine schematische Darstellung der Herstellungsvorrichtung während eines dritten weiteren Arbeitsschritts,
- Fig. 7a: eine schematische Darstellung der Herstellungsvorrichtung während eines ersten Teilarbeitsschritts eines vierten weiteren Arbeitsschritts,
- Fig. 7b: eine schematische Darstellung der Herstellungsvorrichtung während eines zweiten Teilarbeitsschritts des vierten weiteren Arbeitsschritts,
- Fig. 8: eine schematische Darstellung der Herstellungsvorrichtung während eines alternativen vierten weiteren Arbeitsschritts und
- Fig. 9: ein schematisches Ablaufdiagramm eines Verfahrens zur Herstellung der Karton-Kunststoff-Verbundschale.

### Beschreibung der Ausführungsbeispiele

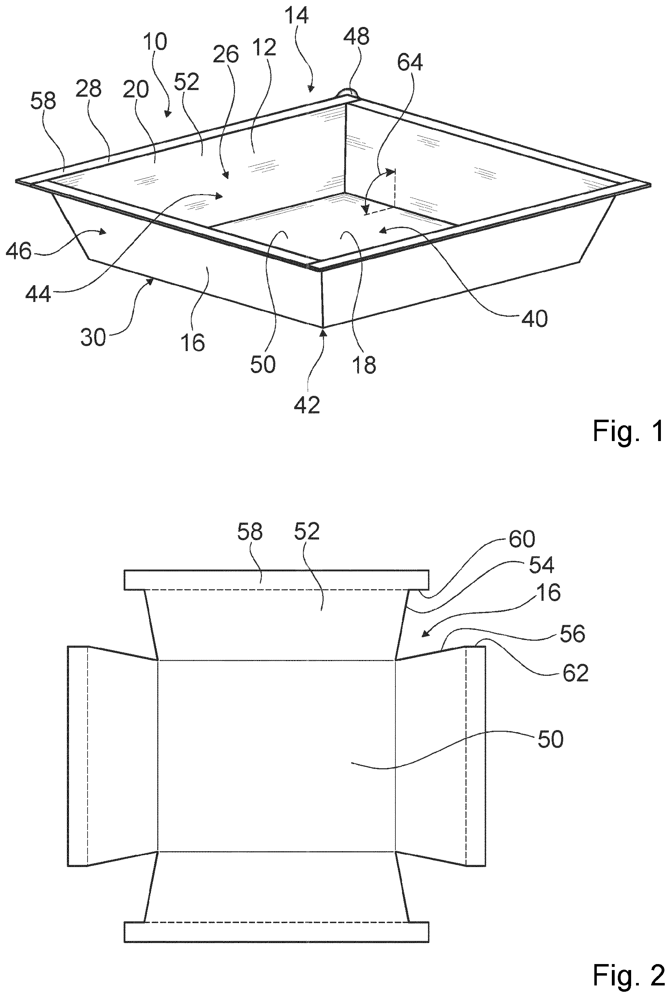

Die Fig. 1 zeigt eine schematische Perspektivdarstellung einer Karton-Kunststoff-Verbundschale 10. Die Karton-Kunststoff-Verbundschale 10 ist als eine MAP-Karton-Kunststoff-Verbundschale für Lebensmittel ausgebildet. Die Karton-Kunststoff-Verbundschale 10 umfasst eine Kunststofffolie 12. Die Karton-Kunststoff-Verbundschale 10 umfasst einen Kartonzuschnitt 16 (siehe auch Fig. 2). Vorzugsweise besteht die Karton-Kunststoff-Verbundschale 10 nur aus dem Kartonzuschnitt 16 und der Kunststofffolie 12 und im geschlossenen Zustand ggf. einer (nicht dargestellten) Deckfolie. Der Kartonzuschnitt 16 ist zu einer Box 30 gefaltet. Die Box 30 / die Karton-Kunststoff-Verbundschale 10 bildet auf einer Innenseite 44 einen Lagerbereich 40 aus. Die Box 30 / die Karton-Kunststoff-Verbundschale 10 ist z.B. zu einer Aufnahme von Lebensmitteln, wie Fleisch, Käse, etc. vorgesehen. Selbstverständlich kann der Lagerbereich 40 auch zu einer Aufnahme anderer Objekte vorgesehen sein. Vorzugsweise sind die Materialien zumindest der Kunststofffolie 12 und/oder der Deckfolie aber ggf. auch des Kartonzuschnitts 16 an das aufzunehmende Objekt und die jeweiligen Lageranforderungen des Objekts angepasst. Die Kunststofffolie 12 liefert die je nach eingelagertem Objekt benötigten Barriereeigenschaften und kann folglich mit unterschiedlichen angepassten chemisch-physikalischen Eigenschaften ausgestattet sein. Die Kunststofffolie 12 ist dehnbar. Die Kunststofffolie 12 ist siegelfähig, so dass die fertige Karton-Kunststoff-Verbundschale 10 mit der Deckfolie verschließbar ist. Die Innenseite 44 der Box 30 / der Karton-Kunststoff-Verbundschale 10 bildet den Lagerbereich 40 aus. Der Lagerbereich 40 ist zur Aufnahme des Objekts vorgesehen. Die Karton-Kunststoff-Verbundschale 10 weist eine Schalenöffnung 26 auf. Durch die Schalenöffnung 26 sind Objekte in die Karton-Kunststoff-Verbundschale 10 einbringbar und/oder aus der Karton-Kunststoff-Verbundschale 10 entnehmbar. Der Lagerbereich 40 / die Schalenöffnung 26 ist mittels der Deckfolie rundum (hermetisch) versiegelbar / abschließbar.

Der Lagerbereich 40 der Box 30 ist vollständig mit der Kunststofffolie 12 ausgekleidet. Der Lagerbereich 40 der Box 30 ist derart mit der Kunststofffolie 12 ausgekleidet, dass die Kunststofffolie 12 mit dem Karton des zu der Box 30 gefalteten Kartonzuschnitts 16 flächig verbunden ist. Die Kunststofffolie 12 und der Karton des Kartonzuschnitts 16 sind derart miteinander verbunden, dass ein einfaches manuelles Trennen von Kunststofffolie 12 und Karton zu einer Zuführung der Kunststofffolie 12 und des Kartons zu unterschiedlichen Recyclingströmen ermöglicht ist. Die Karton-Kunststoff-Verbundschale 10 weist eine Grifflasche 48 auf. Die Grifflasche 48 ist einstückig mit der Kunststofffolie 12 ausgebildet. Die Grifflasche 48 bildet einen Angriffspunkt der Kunststofffolie 12 für ein Abziehen der Kunststofffolie 12 von dem Karton des Kartonzuschnitts 16 aus.

Die aus dem Kartonzuschnitt 16 gefaltete Box 30 ist in Eckbereichen 42 der Box 30 lückenfrei. Die aus dem Kartonzuschnitt 16 gefaltete Box 30 ist abgesehen von der Schalenöffnung 26 der Karton-Kunststoff-Verbundschale 10 lückenfrei.

Der zu der Box 30 gefaltete Kartonzuschnitt 16 ist frei von Überschneidungen und/oder Überlappungen mit sich selbst. Der zu der Box 30 gefaltete Kartonzuschnitt 16 ist frei von Überschneidungen und/oder Überlappungen mit Teilen weiterer Kartonzuschnitte 16. Der zu der Box 30 gefaltete Kartonzuschnitt 16 weist einen Siegelrand 28 auf. Der Siegelrand 28 ist zu einer Befestigung der Deckfolie vorgesehen. Der Siegelrand 28 ist um eine Öffnung der Box 30 / um die Schalenöffnung 26 vollständig umlaufend ausgebildet. Der Siegelrand 28 ist eben. Der Siegelrand 28 ist lagensprungfrei. Der Siegelrand 28 ist genauso wie die Innenseite 44 der Box 30 vollständig von der Kunststofffolie 12 bedeckt. Der zu der Box 30 gefaltete Kartonzuschnitt 16 weist eine Außenseite 46 auf. Die Außenseite 46 des zu der Box 30 gefalteten Kartonzuschnitts 16 liegt der Innenseite 44 gegenüber. Die Außenseite 46 des zu der Box 30 gefalteten Kartonzuschnitts 16 liegt dem Lagerbereich 40 gegenüber. Die Außenseite 46 ist frei von einer Bedeckung durch die Kunststofffolie 12 oder durch eine weitere Kunststofffolie 12. Eine Formstabilität der Karton-Kunststoff-Verbundschale 10 wird zumindest überwiegend durch die mit dem Kartonzuschnitt 16 durch Laminieren verbundene Kunststofffolie 12 erzeugt. Der Karton des Kartonzuschnitts 16 dient überwiegend zu einer Verstärkung eines Stoßschutzes / eines mechanischen Schutzes der Karton-Kunststoff-Verbundschale 10 und/oder zu einer Reduktion eines Kunststoffmaterialbedarfs der Karton-Kunststoff-Verbundschale 10.

Die Fig. 2 zeigt den Kartonzuschnitt 16 in einem ungefalteten Zustand. Der Kartonzuschnitt 16 weist einen Teilbereich 50 auf, der dazu vorgesehen ist, einen Boden 18 der Box 30 / der Karton-Kunststoff-Verbundschale 10 auszubilden. Der Kartonzuschnitt 16 weist weitere Teilbereiche 52 auf, die dazu vorgesehen sind, Seitenwände 20 der Box 30 / der Karton-Kunststoff-Verbundschale 10 auszubilden. Bei einem Falten der Box 30 aus dem Kartonzuschnitt 16 werden die weiteren Teilbereiche 52 aus der Ebene des Teilbereichs 50 (nach oben) herausgeklappt. Die Seitenwände 20 der Box 30 / der Karton-Kunststoff-Verbundschale 10 liegen schräg oder senkrecht zu dem Boden 18 der Box 30. Ein zwischen einer Seitenwand 20 der Box 30 und dem Boden 18 der Box 30 aufgespannter Winkel 64 beträgt weniger als 150°, vorzugsweise weniger als 120°. Die Teilbereiche 52, die dazu vorgesehen sind, die Seitenwände 20 der Box 30 / der Karton-Kunststoff-Verbundschale 10 auszubilden, weisen Seitenkanten 54, 56 auf. Die Seitenkanten 54, 56 der die Seitenwände 20 ausbildenden Teilbereiche 52 sind frei von Klebelaschen. Gegenüberliegende Seitenkanten 54, 56 der die Seitenwände 20 ausbildenden Teilbereiche 52 berühren sich in einem zu der Box 30 gefalteten Zustand des Kartonzuschnitts 16. Die gegenüberliegenden Seitenkanten 54, 56 der die Seitenwände 20 ausbildenden Teilbereiche 52 berühren sich in dem zu der Box 30 gefalteten Zustand des Kartonzuschnitts 16, ohne dabei gegenseitig zu überlappen. Der Kartonzuschnitt 16 weist zusätzliche weitere Teilbereiche 58 auf, die dazu vorgesehen sind, den Siegelrand 28 der Box 30 / der Karton-Kunststoff-Verbundschale 10 auszubilden. Die Teilbereiche 58, die dazu vorgesehen sind, Teile des Siegelrands 28 der Box 30 / der Karton-Kunststoff-Verbundschale 10 auszubilden, weisen Seitenkanten 60, 62 auf. Die Seitenkanten 60, 62 der den Siegelrand 28 ausbildenden Teilbereiche 58 sind frei von Klebelaschen. Gegenüberliegende Seitenkanten 60, 62 der den Siegelrand 28 ausbildenden Teilbereiche 58 berühren sich in einem zu der Box 30 gefalteten Zustand des Kartonzuschnitts 16. Die gegenüberliegenden Seitenkanten 60, 62 der den Siegelrand 28 ausbildenden Teilbereiche 58 berühren sich in dem zu der Box 30 gefalteten Zustand des Kartonzuschnitts 16, ohne dabei gegenseitig zu überlappen. Die den Siegelrand 28 ausbildenden Teilbereiche 58 werden beim Falten des Kartonzuschnitts 16 zu der Box 30 von den Seitenwänden 20 weggeklappt. In dem zu der Box 30 gefalteten Zustand des Kartonzuschnitts 16 liegen die den Siegelrand 28 ausbildenden Teilbereiche 58 in einer gemeinsamen Ebene. Die Ebene, in der die den Siegelrand 28 ausbildenden Teilbereiche 58 des zu der Box 30 gefalteten Kartonzuschnitts 16 liegen, verläuft parallel zu dem den Boden 18 der Box 30 ausbildenden Teilbereich 50 des Kartonzuschnitts 16.

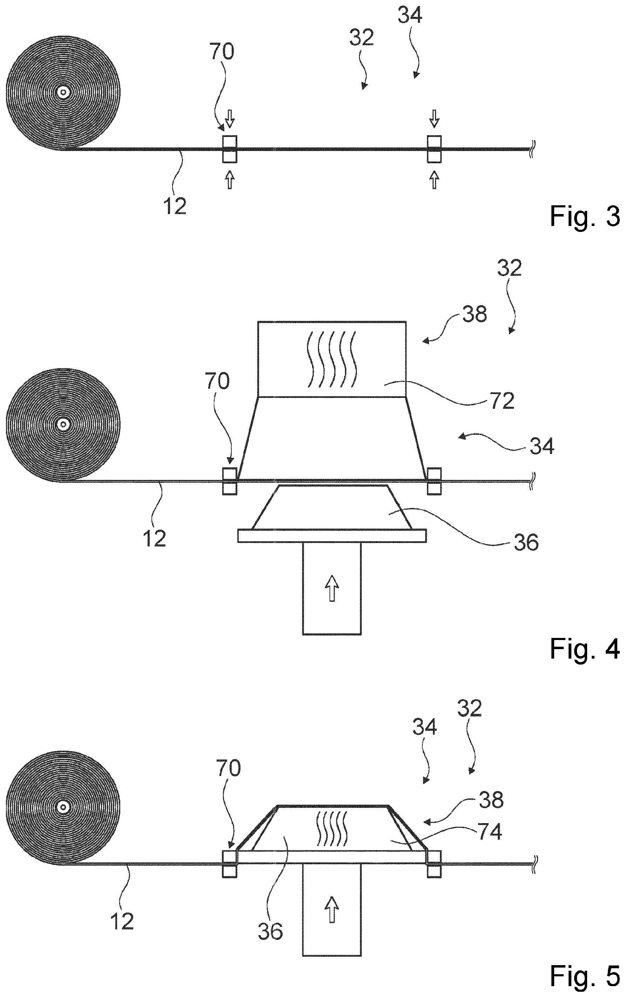

Die Figuren 3 bis 8 zeigen schematisch und schrittweise ein Verfahren zur Herstellung der Karton-Kunststoff-Verbundschale 10 unter einer Verwendung einer Herstellungsvorrichtung 32. Die Herstellungsvorrichtung 32 ist zu einer Durchführung des erfindungsgemäßen Verfahrens vorgesehen. Von der Herstellungsvorrichtung 32 wird zu einer Herstellung der Karton-Kunststoff-Verbundschalen 10 aus jeweils einer Kunststofffolie 12 und jeweils einem Kartonzuschnitt 16 ein Verfahren durchgeführt, welches zumindest einen Vorverformungsschritt 66, bei dem die Kunststofffolie 12 vorverformt wird, und zumindest einen Verbindungsschritt 68, bei dem an den Vorverformungsschritt 66 anschließend die Kunststofffolie 12 mit dem Kartonzuschnitt 16 verbunden wird, aufweist. Die Fig. 1 zeigt die mittels der Herstellungsvorrichtung 32 fertig hergestellte Karton-Kunststoff-Verbundschale 10. Die Herstellungsvorrichtung 32 weist eine Folienvorverformeinheit 34 auf (vgl. v.a. Fig. 4 und 5). Die Folienvorverformeinheit 34 ist dazu vorgesehen, eine zunächst eben bereitgestellte Folienbahn (vgl. Fig. 3) derart vorzuverformen, dass eine, einer zu erzielenden Innenkontur der fertigen Karton-Kunststoff-Verbundschale 10 etwa entsprechende Vorform der Kunststofffolie 12 erreicht wird. Die Folienvorverformeinheit 34 weist dazu ein Stempelwerkzeug 36 auf. Das Stempelwerkzeug 36 ist als ein Unterstempel ausgebildet. Das Stempelwerkzeug 36 weist eine Außenkontur auf, die zumindest im Wesentlichen einer zu erzielenden Innenkontur der fertigen Karton-Kunststoff-Verbundschale 10 entspricht. Die Folienvorverformeinheit 34 weist einen Rahmen 70, insbesondere einen Stempelrahmen, auf. Der Rahmen 70 ist dazu vorgesehen, einen Teil der Folienbahn der Kunststofffolie 12 vor Durchführung des Vorverformungsschritts 66 fest eben einzuspannen. Das Stempelwerkzeug 36 ist dazu vorgesehen, durch Pressen der in dem Rahmen 70 eingespannten Kunststofffolie 12 eine Vorform zu erzeugen, die der zu erzielenden Innenkontur der fertigen Karton-Kunststoff-Verbundschale 10 grob entspricht.

Die Folienvorverformeinheit 34 weist zumindest eine Heizeinrichtung 38 auf. Die Heizeinrichtung 38 ist zu einer Erwärmung der Kunststofffolie 12 vor dem Vorverformen der Kunststofffolie 12 (siehe Fig. 4) und/oder während des Vorverformens der Kunststofffolie 12 (siehe Fig. 5) vorgesehen. Die Heizeinrichtung 38 weist eine erste Heizeinheit 72 auf (siehe Fig. 4). Die erste Heizeinheit 72 ist als eine von dem Stempelwerkzeug 36 getrennt ausgebildete Heizeinheit 72 ausgebildet. Die erst Heizeinheit 72 ist zumindest dazu vorgesehen, die Kunststofffolie 12 vor dem Vorverformen aufzuheizen. Die erst Heizeinheit 72 kann alternativ oder zusätzlich dazu vorgesehen sein, die Kunststofffolie 12 während des Vorverformens aufzuheizen. Die erste Heizeinheit 72 weist ein Heizgebläse oder einen Heizstrahler auf. Die erste Heizeinheit 72 ist dazu vorgesehen, einen erhitzten Luftstrom oder Wärmestrahlung auf die Folie aufzubringen. Alternativ oder zusätzlich kann die erste Heizeinheit 72 auch dazu vorgesehen sein, das Stempelwerkzeug 36, insbesondere eine Oberfläche des Stempelwerkzeugs 36, aufzuheizen. Die Heizeinrichtung 38 weist eine zweite Heizeinheit 74 auf (siehe Fig. 5). Die zweite Heizeinheit 74 ist zumindest teilweise einstückig mit dem Stempelwerkzeug 36 ausgebildet. Das Stempelwerkzeug 36 weist eine interne Heizquelle, beispielsweise eine Heizschlange, auf. Die zweite Heizeinheit 74 ist zumindest dazu vorgesehen, die Kunststofffolie 12 während des Vorverformens aufzuheizen. Die zweite Heizeinheit 74 ist dazu vorgesehen, das Stempelwerkzeug 36, insbesondere eine Oberfläche des Stempelwerkzeugs 36, aufzuheizen. Es ist denkbar, dass die Heizeinrichtung 38 nur die erste Heizeinheit 72 oder nur die zweite Heizeinheit 74 aufweist. In den Figuren 5 bis 8 sind die weiteren Herstellungsschritte beispielhaft unter Verwendung nur der zweiten Heizeinheit 74 dargestellt. Alternativ oder zusätzlich könnte auch die erste Heizeinheit 72 in den Herstellungsschritten der Figuren 5 bis 8 verwendet werden.

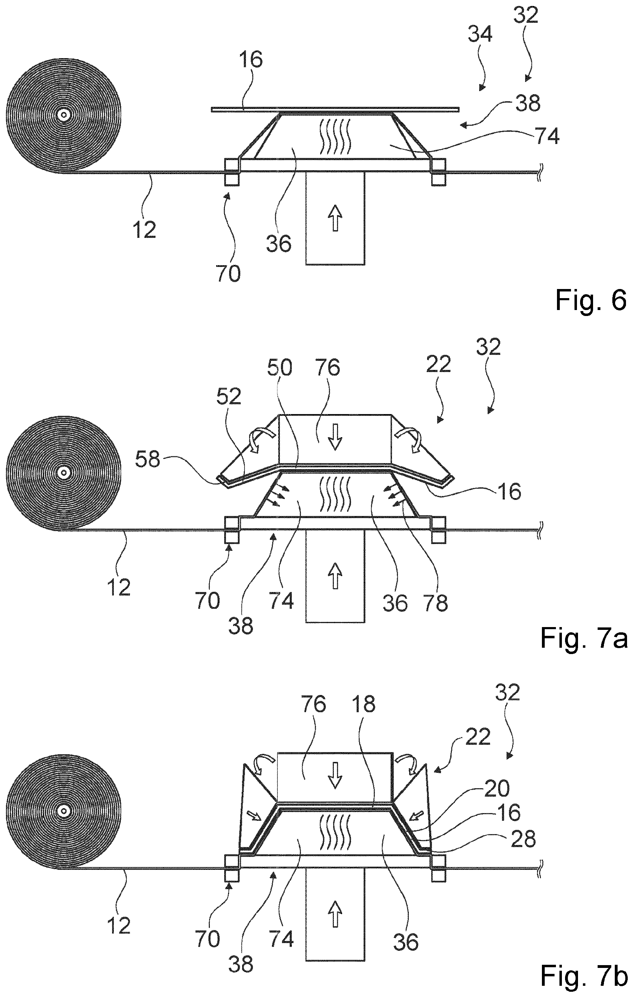

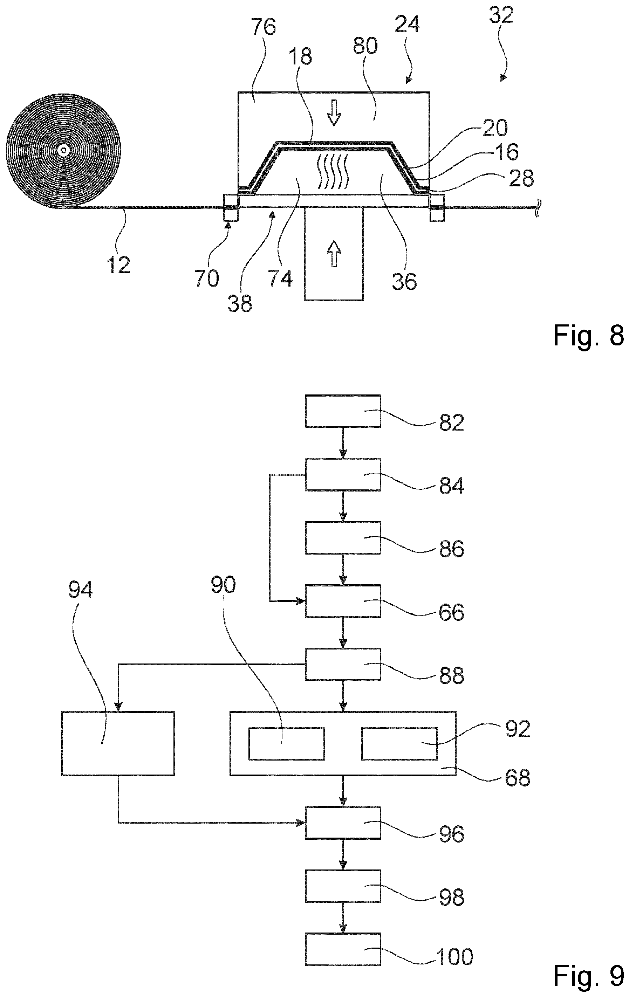

Die Herstellungsvorrichtung 32 weist eine Pressvorrichtung 76 auf (siehe Fig. 7a bis 8). Die Pressvorrichtung 76 ist dazu vorgesehen, den Kartonzuschnitt 16 auf die vorverformte Kunststofffolie 12 aufzupressen. Das Stempelwerkzeug 36 bildet ein gegen eine Presskraft der Pressvorrichtung 76 gegenhaltendes Gegenstück aus. Die Pressvorrichtung 76 wird zunächst aus einer, einer Stempelbewegung des Stempelwerkzeugs 36 entgegengesetzten Richtung auf das Stempelwerkzeug 36 aufgepresst, während die Kunststofffolie 12 und der noch ungefaltete oder nur teilweise gefaltete Kartonzuschnitt 16 zwischen dem Stempelwerkzeug 36 und der Pressvorrichtung 76 angeordnet sind. Durch das Aufpressen des Kartonzuschnitts 16 auf die Kunststofffolie 12 und ggf. das zeitgleiche Erhitzen der Kunststofffolie 12 wird die Kunststofffolie 12 auf den Kartonzuschnitt 16 laminiert. Während des Pressvorgangs der Pressvorrichtung 76 bleibt das Stempelwerkzeug 36 unbewegt. In dem Ausführungsbeispiel aus den Figuren 7a und 7b wird zunächst der Boden 18 des Kartonzuschnitts 16 laminiert und anschließend die Seitenwände 20. In dem alternativen Ausführungsbeispiel der Fig. 8 hingegen werden Boden 18 und Seitenwände 20 des Kartonzuschnitts 16 gleichzeitig laminiert.

Die in den Figuren 7a und 7b dargestellte Herstellungsvorrichtung 32 weist eine Pressvorrichtung 76 mit einem Klappmechanismus 22 auf. Der Klappmechanismus 22 ist dazu vorgesehen, den Kartonzuschnitt 16 zu falten. Der Klappmechanismus 22 ist dazu vorgesehen, den Kartonzuschnitt 16 zur Ausbildung und Laminierung der Seitenwände 20 zu falten. Der Klappmechanismus 22 presst die die Seitenwände 20 ausbildenden Teilbereiche 52 des Kartonzuschnitts 16 auf die vorverformte Kunststofffolie 12. Zusätzlich ist denkbar, dass das Stempelwerkzeug 36 einen Ansaugmechanismus 78 aufweist, welcher dazu vorgesehen ist, die Kunststofffolie 12 zumindest in den Bereichen auszubildender Seitenwände 20 an das Stempelwerkzeug 36 anzusaugen. Dadurch kann eine Laminierung der Seitenwände 20 vorteilhaft optimiert werden, insbesondere indem verhindert werden kann, dass sich bei dem Laminieren Luftblasen o. dgl. zwischen der Kunststofffolie 12 und dem Stempelwerkzeug 36 bilden.

Die in der Figur 8 dargestellte Herstellungsvorrichtung 32 weist eine Pressvorrichtung 76 mit einem Stempelmechanismus 24 (statt dem Klappmechanismus 22 aus den Figuren 7a und 7b) auf. Der Stempelmechanismus 24 umfasst ein zu dem Stempelwerkzeug 36 komplementär ausgebildetes weiteres Stempelwerkzeug 80. Das weitere Stempelwerkzeug 80 ist als ein Oberstempel ausgebildet. Das weitere Stempelwerkzeug 80 wird aus einer Richtung auf den auf die vorverformte Kunststofffolie 12 aufgelegten Kartonzuschnitt 16 aufgepresst, welche entgegengesetzt ist zu einer Richtung, in die das Stempelwerkzeug 36 während des Vorverformens der Kunststofffolie 12 bewegt wird. Das weitere Stempelwerkzeug 80 faltet und laminiert in einem gemeinsamen Arbeitsschritt.

Die Fig. 9 zeigt ein schematisches Ablaufdiagramm eines Verfahrens zur Herstellung der Karton-Kunststoff-Verbundschale 10. Die Fig. 1 zeigt die mit dem beschriebenen Verfahren fertig hergestellte Karton-Kunststoff-Verbundschale 10. In zumindest einem Verfahrensschritt 82 wird eine Folienbahn der Kunststofffolie 12 flächig ausgebreitet, z.B. ausgerollt. In dem Verfahrensschritt 82 wird die Kunststofffolie 12 bereitgestellt. In zumindest einem weiteren Verfahrensschritt 84 wird ein Abschnitt der Folienbahn der Kunststofffolie 12 in den Rahmen 70 eingespannt (siehe auch Fig. 3). In zumindest einem weiteren (optionalen) Verfahrensschritt 86 wird zumindest der in dem Rahmen 70 eingespannte Abschnitt der Kunststofffolie 12, z.B. durch die erste Heizeinheit 72, erhitzt. In dem Verfahrensschritt 86 wird die Kunststofffolie 12 unmittelbar vor dem Vorverformen aufgeheizt. In dem Vorverformungsschritt 66 wird das Stempelwerkzeug 36 in den Rahmen 70 eingepresst (siehe auch Fig. 4 und 5). Dabei wird die Kunststofffolie 12 vorverformt. Das Stempelwerkzeug 36 kann dabei, z.B. durch die zweite Heizeinheit 74, beheizt sein. In dem Vorverformungsschritt 66 wird die Kunststofffolie 12 während des Vorverformens aufgeheizt. Es ist jedoch abhängig von den chemisch-physikalischen Eigenschaften der Kunststofffolie 12 auch denkbar, dass auf das Aufheizen bei der Vorverformung vollständig verzichtet werden kann. In dem Vorverformungsschritt 66 wird die Kunststofffolie 12 zu der Schalenform 14 vorverformt, welche vorzugsweise der Form der Innenseite 44 der Karton-Kunststoff-Verbundschale 10 bereits stark ähnelt. Optional wird die Kunststofffolie 12 bereits in dem Vorverformungsschritt 66 seitlich an das Stempelwerkzeug 36 angesaugt (siehe auch Fig. 7a). In dem Vorverformungsschritt 66 wird die Kunststofffolie 12 zur Ausbildung der Schalenform 14 vorverformt.

In einem weiteren Verfahrensschritt 88 wird der Kartonzuschnitt 16 auf die vorverformte Kunststofffolie 12 aufgelegt. In dem Verfahrensschritt 88 wird der Kartonzuschnitt 16 bereitgestellt. Der in dem Verfahrensschritt 88 bereitgestellte Kartonzuschnitt 16 ist unmittelbar vor dem Verbinden mit der vorverformten Kunststofffolie 12 ungefaltet oder unvollständig gefaltet. Der Kartonzuschnitt 16 wird dabei auf einer dem Stempelwerkzeug 36 gegenüberliegenden Seite der Kunststofffolie 12 auf die Kunststofffolie 12 aufgelegt (siehe auch Fig. 6). In dem darauf folgenden Verbindungsschritt 68 wird die Kunststofffolie 12 auf den Kartonzuschnitt 16 laminiert. In dem Verbindungsschritt 68 wird der Kartonzuschnitt 16 mit der bereits vorverformten Kunststofffolie 12 zur Ausbildung der Karton-Kunststoff-Verbundschale 10 verbunden. In dem Verbindungsschritt 68 wird der Kartonzuschnitt 16 mit der Kunststofffolie 12 derart verbunden, dass die Kunststofffolie 12 und der Kartonzuschnitt 16 manuell trennbar sind. In dem Verbindungsschritt 68 wird der Kartonzuschnitt 16 mit der Kunststofffolie 12 derart verbunden, dass die Kunststofffolie 12 und der Kartonzuschnitt 16 recyclingfähig trennbar sind. Die Verbindung des Kartonzuschnitts 16 mit der Kunststofffolie 12, insbesondere der Verbindungsschritt 68, läuft vollständig klebstofffrei, d.h. insbesondere vollständig frei von einem Auftragen eines zusätzlichen Klebstoffs, ab.

Bei einer Durchführung des Verbindungsschritts 68 mit dem in den Figuren 7a und 7b gezeigten Klappmechanismus 22 wird bei einem Verbinden des Kartonzuschnitts 16 mit der vorverformten Kunststofffolie 12 der für eine Ausbildung des Bodens 18 der Karton-Kunststoff-Verbundschale 10 vorgesehene Teilbereich 50 des Kartonzuschnitts 16 in einem ersten Verbindungsteilschritt 90 vorgenommen, welcher zeitlich vor einem zweiten Verbindungsteilschritt 92 liegt, bei dem die für die Ausbildung der Seitenwände 20 der Karton-Kunststoff-Verbundschale 10 vorgesehenen weiteren Teilbereiche 52 des Kartonzuschnitts 16 mit der Kunststofffolie 12 verbunden werden. In dem Verbindungsschritt 68 wird in diesem Fall der Kartonzuschnitt 16 mittels des Klappmechanismus 22 auf die Kunststofffolie 12 gefaltet. Dabei wird der Kartonzuschnitt 16 derart gefaltet, dass der gefaltete Kartonzuschnitt 16 frei bleibt von Überschneidungen und/oder Überlappungen mit sich selbst und mit weiteren Kartonzuschnitten. Außerdem wird bei dem Verbindungsschritt 68, insbesondere bei dem zweiten Verbindungsteilschritt 92 der Kartonzuschnitt 16 derart gefaltet, dass der rund um die Schalenöffnung 26 der fertigen Karton-Kunststoff-Verbundschale 10 umlaufende ebene und lagensprungfreie Siegelrand 28 erzeugt wird. Bei dem Falten des Kartonzuschnitts 16 in dem Verbindungsschritt 68 wird aus dem Kartonzuschnitt 16 die Box 30 erzeugt. Das Erzeugen der Box 30 aus dem Kartonzuschnitt 16 läuft vollständig klebstofffrei ab. Das Erzeugen der Box 30 aus dem Kartonzuschnitt 16 läuft vollständig ohne Verwendung / Auftragen von zusätzlichen Klebstoffen ab.

Alternativ kann anstelle des den Klappmechanismus 22 verwendenden Verbindungsschritts 68 ein ohne einen Klappmechanismus 22 auskommender alternativer Verbindungsschritt 94 durchgeführt werden. Bei dem alternativen Verbindungsschritt 94 wird bei dem Verbinden des Kartonzuschnitts 16 mit der vorverformten Kunststofffolie 12 der Kartonzuschnitt 16 mittels des Stempelmechanismus 24 auf die Kunststofffolie 12 gefaltet / zu der Box 30 gefaltet und gleichzeitig im selben Arbeitsschritt mit der Kunststofffolie 12 verbunden (siehe auch Fig. 8). In dem alternativen Verbindungsschritt 94 werden die lagenweise übereinander angeordneten Kunststofffolien 12 und Kartonzuschnitte 16 zwischen zwei komplementären Stempelwerkzeugen 36, 80 miteinander verpresst, wobei die Kunststofffolie 12 zeitlich vor dem Verpressen mit dem Kartonzuschnitt 16 bereits vorverformt wurde und wobei vorzugsweise das an der Kunststofffolie 12 anliegende Stempelwerkzeug 36 beheizt wird.

In zumindest einem weiteren Verfahrensschritt 96 wird die fertig geformte Karton-Kunststoff-Verbundschale 10 aus der Herstellungsvorrichtung 32 entnommen. Die unverschlossene Karton-Kunststoff-Verbundschale 10 ist mit weiteren unverschlossenen Karton-Kunststoff-Verbundschalen 10 stapelbar. In zumindest einem weiteren Verfahrensschritt 98 werden die fertig geformten Karton-Kunststoff-Verbundschalen 10 einer Fülllinie zugeführt, wo der Lagerbereich 40 der Karton-Kunststoff-Verbundschalen 10 mit Objekten aufgefüllt wird. In zumindest einem weiteren Verfahrensschritt 100 werden die gefüllten Karton-Kunststoff-Verbundschalen 10 einer Verschließlinie zugeführt, wo der Lagerbereich 40 der gefüllten Karton-Kunststoff-Verbundschalen 10 durch die Deckfolie verschlossen, insbesondere gasdicht verschlossen wird. Vor dem Verschluss der gefüllten Karton-Kunststoff-Verbundschalen 10 kann die in den Karton-Kunststoff-Verbundschalen 10 verbleibende Luft durch ein Gas, insbesondere ein Inertgas / Schutzgas wie Stickstoff o.ä. ersetzt werden.

## Patentansprüche

1. Verfahren zur Herstellung einer Karton-Kunststoff-Verbundschale (10), insbesondere einer MAP-Karton-Kunststoff-Verbundschale für Lebensmittel, aufweisend zumindest die Verfahrensschritte (66, 68, 82, 88):
- Bereitstellen einer Kunststofffolie (12),
- Vorverformen der Kunststofffolie (12) zur Ausbildung einer Schalenform (14),
- Bereitstellen eines Kartonzuschnitts (16),
- Verbinden des Kartonzuschnitts (16) mit der bereits vorverformten Kunststofffolie (12) zur Ausbildung der Karton-Kunststoff-Verbundschale (10), **dadurch gekennzeichnet, dass** der bereitgestellte Kartonzuschnitt (16) unmittelbar vor dem Verbinden mit der vorverformten Kunststofffolie (12) ungefaltet oder unvollständig gefaltet ist, wobei bei dem Verbinden des Kartonzuschnitts (16) mit der vorverformten Kunststofffolie (12) der Kartonzuschnitt (16) mittels eines Klappmechanismus (22) und/oder mittels eines Stempelmechanismus (24) auf die Kunststofffolie (12) gefaltet wird.

2. Verfahren nach Anspruch 1, **dadurch gekennzeichnet, dass** der Kartonzuschnitt (16) mit der Kunststofffolie (12) derart verbunden wird, dass Kunststofffolie (12) und Kartonzuschnitt (16) manuell, und insbesondere recyclingfähig, trennbar sind.

3. Verfahren nach Anspruch 1 oder 2, **dadurch gekennzeichnet, dass** die Kunststofffolie (12) mit dem Kartonzuschnitt (16) durch Laminieren verbunden wird.

4. Verfahren nach Anspruch 3, **dadurch gekennzeichnet, dass** eine Formstabilität der Karton-Kunststoff-Verbundschale (10) durch die mit dem Kartonzuschnitt (16) durch Laminieren verbundene Kunststofffolie (12) erzeugt wird.

5. Verfahren nach einem der vorhergehenden Ansprüche, **dadurch gekennzeichnet, dass** die Kunststofffolie (12) bei dem Vorverformen in eine Form gebracht, insbesondere gezogen, wird, die zumindest im Wesentlichen einer zu erzielenden Innenform der Karton-Kunststoff-Verbundschale (10) entspricht.

6. Verfahren nach einem der vorhergehenden Ansprüche, **dadurch gekennzeichnet, dass** die Kunststofffolie (12) bei dem Vorverformen oder unmittelbar vor dem Vorverformen aufgeheizt wird.

7. Verfahren nach einem der vorhergehenden Ansprüche, **dadurch gekennzeichnet, dass** bei dem Verbinden des Kartonzuschnitts (16) mit der vorverformten Kunststofffolie (12) ein für eine Ausbildung eines Bodens (18) der Karton-Kunststoff-Verbundschale (10) vorgesehener Teilbereich (50) des Kartonzuschnitts (16) vor einem für eine Ausbildung einer Seitenwand (20) der Karton-Kunststoff-Verbundschale (10) vorgesehenen weiteren Teilbereich (52) des Kartonzuschnitts (16) mit der Kunststofffolie (12) verbunden wird.

8. Verfahren nach einem der vorhergehenden Ansprüche, **dadurch gekennzeichnet, dass,** insbesondere bei dem Verbinden des Kartonzuschnitts (16) mit der vorverformten Kunststofffolie (12), der Kartonzuschnitt (16) derart gefaltet wird, dass der gefaltete Kartonzuschnitt (16) frei bleibt von Überschneidungen und/oder Überlappungen mit sich selbst und mit weiteren Kartonzuschnitten.

9. Verfahren nach einem der vorhergehenden Ansprüche, **dadurch gekennzeichnet, dass** bei dem Falten des Kartonzuschnitts (16) ein, insbesondere rund um eine Schalenöffnung (26) der fertigen Karton-Kunststoff-Verbundschale (10) verlaufender, ebener und/oder lagensprungfreier Siegelrand (28) erzeugt wird.

10. Verfahren nach einem der vorhergehenden Ansprüche, **dadurch gekennzeichnet, dass** zumindest die Verbindung des Kartonzuschnitts (16) mit der Kunststofffolie (12) und/oder zumindest das Erzeugen einer Box (30) aus dem Kartonzuschnitt (16) vollständig frei von einem Auftragen von zusätzlichen Klebstoffen abläuft.

11. Herstellungsvorrichtung (32) zu einer Herstellung von Karton-Kunststoff-Verbundschalen (10) zumindest aus jeweils einer Kunststofffolie (12) und jeweils einem Kartonzuschnitt (16) mittels eines ein Vorverformen der Kunststofffolie (12) und ein daran anschließendes Verbinden der Kunststofffolie (12) mit dem Kartonzuschnitt (16) aufweisenden Verfahrens nach einem der vorhergehenden Ansprüche, aufweisend eine Folienvorverformeinheit (34) und eine Pressvorrichtung (76) mit einem Stempelmechanismus (24), wobei die Folienvorverformeinheit (34) zumindest ein Stempelwerkzeug (36) mit einer Außenkontur, die zumindest im Wesentlichen einer zu erzielenden Innenkontur der fertigen Karton-Kunststoff-Verbundschale (10) entspricht, aufweist, wobei der Stempelmechanismus (24) ein zu dem Stempelwerkzeug (36) komplementär ausgebildetes weiteres Stempelwerkzeug (80) aufweist, das dazu vorgesehen ist, in einem gemeinsamen Arbeitsschritt zu falten und zu laminieren, und/oder aufweisend eine Folienvorverformeinheit (34) und eine Pressvorrichtung (76) mit einem Klappmechanismus (22), wobei der Klappmechanismus (22) dazu vorgesehen ist, den Kartonzuschnitt (16) zur Ausbildung und Laminierung von Seitenwänden (20) zu falten, in dem der Klappmechanismus (22) die Seitenwände (20) ausbildenden Teilbereiche (52) des Kartonzuschnitts (16) auf die vorverformte Kunststofffolie (12) presst.

12. Herstellungsvorrichtung (32) nach Anspruch 11, **dadurch gekennzeichnet, dass** die Folienvorverformeinheit (34) zumindest eine Heizeinrichtung (38) zu einer Erwärmung der Kunststofffolie (12) vor und/oder während eines Vorverformens der Kunststofffolie (12) aufweist.

13. Herstellungsvorrichtung (32) nach Anspruch 12, **dadurch gekennzeichnet, dass** die Heizeinrichtung (38) zumindest teilweise einstückig mit dem Stempelwerkzeug (36) ausgebildet ist.

## Claims

1. Method for producing a cardboard-plastics composite tray (10), in particular a MAP cardboard-plastics composite tray for food, comprising at least the following method steps (66, 68, 82, 88): - providing a plastics film (12),
- pre-forming the plastics film (12) to form a tray shape (14),
- providing a cardboard blank (16),
- bonding the cardboard blank (16) to the already pre-formed plastics film (12) to form the cardboard-plastics composite tray (10), **characterized in that** the cardboard blank (16) provided is not folded or is incompletely folded immediately before being bonded to the pre-formed plastics film (12), when the cardboard blank (16) is bonded to the pre-formed plastics film (12), the cardboard blank (16) being folded onto the plastics film (12) by means of a folding mechanism (22) and/or by means of a stamping mechanism (24).

2. Method according to claim 1, **characterized in that** the cardboard blank (16) is bonded to the plastics film (12) in such a way that the plastics film (12) and the cardboard blank (16) can be separated manually and, in particular, such that they can be recycled.

3. Method according to claim 1 or 2, **characterized in that** the plastics film (12) is bonded to the cardboard blank (16) by lamination.

4. Method according to claim 3, **characterized in that** a dimensional stability of the cardboard-plastics composite tray (10) is created by the plastics film (12) bonded to the cardboard blank (16) by lamination.

5. Method according to any of the preceding claims, **characterized in that** the plastics film (12) is brought, in particular drawn, into a shape during the pre-forming process which at least substantially corresponds to an inner shape to be attained of the cardboard-plastics composite tray (10).

6. Method according to any of the preceding claims, **characterized in that** the plastics film (12) is heated during the pre-forming process or immediately before the pre-forming process.

7. Method according to any of the preceding claims, **characterized in that** when the cardboard blank (16) is bonded to the pre-formed plastics film (12), a partial region (50) of the cardboard blank (16), which is intended to form a base (18) of the cardboard-plastics composite tray (10), is bonded to the plastics film (12) before a further partial region (52) of the cardboard blank (16) which is intended to form a side wall (20) of the cardboard-plastics composite tray (10).

8. Method according to any of the preceding claims, **characterized in that,** in particular when the cardboard blank (16) is bonded to the pre-formed plastics film (12), the cardboard blank (16) is folded in such a way that the folded cardboard blank (16) remains free of intersections and/or overlaps with itself and with other cardboard blanks.

9. Method according to any of the preceding claims, **characterized in that** when the cardboard blank (16) is folded, a sealing edge (28) is created which is planar and/or free of layer jumps, and which in particular extends around a tray opening (26) of the finished cardboard-plastics composite tray (10).

10. Method according to any of the preceding claims, **characterized in that** at least the bonding of the cardboard blank (16) to the plastics film (12) and/or at least the creation of a box (30) from the cardboard blank (16) takes place completely free of the application of additional adhesives.

11. Production device (32) for producing cardboard-plastics composite trays (10) at least from one plastics film (12) and one cardboard blank (16) each by means of a method according to any of the preceding claims, which method comprises pre-forming of the plastics film (12) and subsequent bonding of the plastics film (12) to the cardboard blank (16), the production device comprising a film pre-forming unit (34) and a pressing device (76) with a stamping mechanism (24), wherein the film pre-forming unit (34) has at least one stamping tool (36) having an outer contour that at least substantially corresponds to an inner contour to be attained of the finished cardboard-plastics composite tray (10), wherein the stamping mechanism (24) has a further stamping tool (80) which is complementary to the stamping tool (36) and is intended to fold and laminate in a common work step, and/or comprising a film pre-forming unit (34) and a pressing device (76) with a folding mechanism (22), wherein the folding mechanism (22) is intended to fold the cardboard blank (16) for forming and laminating side walls (20) by the folding mechanism (22) pressing partial regions (52) of the cardboard blank (16) forming the side walls (20) onto the pre-formed plastics film (12).

12. Production device (32) according to claim 11, **characterized in that** the film pre-forming unit (34) has at least one heating device (38) for heating the plastics film (12) before and/or during pre-forming of the plastics film (12).

13. Production device (32) according to claim 12, **characterized in that** the heating device (38) is formed at least partially in one piece with the stamping tool (36).

## Revendications

1. Procédé de fabrication d'une coque composite en carton et matière plastique (10), en particulier d'une coque composite en carton, matière plastique et MAP pour aliments, présentant au moins les étapes de procédé (66, 68, 82, 88) consistant à :
- fournir un film en matière plastique (12),
- préformer le film en matière plastique (12) pour la formation d'une forme de coque (14),
- fournir une découpe de carton (16),
- assembler la découpe de carton (16) avec le film en matière plastique (12) déjà préformé pour la formation de la coque composite en carton et matière plastique (10), **caractérisé en ce que** la découpe de carton (16) fournie est non pliée ou incomplètement pliée immédiatement avant l'assemblage avec le film en matière plastique (12) préformé, dans lequel, lors de l'assemblage de la découpe de carton (16) avec le film en matière plastique (12) préformé, la découpe de carton (16) est pliée sur le film en matière plastique (12) au moyen d'un mécanisme de pliage (22) et/ou au moyen d'un mécanisme de poinçonnage (24).

2. Procédé selon la revendication 1, **caractérisé en ce que** la découpe de carton (16) est reliée au film en matière plastique (12) de telle sorte que le film en matière plastique (12) et la découpe de carton (16) peuvent être séparés manuellement, et en particulier de manière recyclable.

3. Procédé selon la revendication 1 ou 2, **caractérisé en ce que** le film en matière plastique (12) est relié à la découpe de carton (16) par laminage.

4. Procédé selon la revendication 3, **caractérisé en ce qu'**une stabilité de forme de la coque composite en carton et matière plastique (10) est générée par le film en matière plastique (12) relié à la découpe de carton (16) par laminage.

5. Procédé selon l'une des revendications précédentes,
**caractérisé en ce que,** lors du préformage, le film en matière plastique (12) est mis en forme, en particulier étiré, laquelle forme correspond au moins sensiblement à une forme intérieure à obtenir de la coque composite en carton et matière plastique (10).

6. Procédé selon l'une des revendications précédentes,
**caractérisé en ce que** le film en matière plastique (12) est chauffé lors du préformage ou immédiatement avant le préformage.

7. Procédé selon l'une des revendications précédentes,
**caractérisé en ce que**, lors de l'assemblage de la découpe de carton (16) avec le film en matière plastique (12) préformé, une zone partielle (50) de la découpe de carton (16) prévue pour une formation d'un fond (18) de la coque composite en carton et matière plastique (10) est assemblée avec le film en matière plastique (12) avant une autre zone partielle (52) de la découpe de carton (16) prévue pour une formation d'une paroi latérale (20) de la coque composite en carton et matière plastique (10).

8. Procédé selon l'une des revendications précédentes,
**caractérisé en ce que,** en particulier lors de l'assemblage de la découpe de carton (16) avec le film en matière plastique (12) préformé, la découpe de carton (16) est pliée de telle sorte que la découpe de carton (16) pliée reste exempte de juxtapositions et/ou de chevauchements avec elle-même et avec d'autres découpes de carton.

9. Procédé selon l'une des revendications précédentes,
**caractérisé en ce que,** lors du pliage de la découpe de carton (16), un bord de scellage (28) plan et/ou sans saut de position, est généré, lequel s'étend en particulier tout autour d'une ouverture de coque (26) de la coque composite en carton et matière plastique (10) produite.

10. Procédé selon l'une des revendications précédentes, **caractérisé en ce qu'**au moins l'assemblage de la découpe de carton (16) avec le film en matière plastique (12) et/ou au moins la génération d'une boîte (30) à partir de la découpe de carton (16) sont effectués entièrement sans application d'adhésifs supplémentaires.

11. Dispositif de fabrication (32) pour une fabrication de coques composites en carton et matière plastique (10) au moins à partir de respectivement un film en matière plastique (12) et de respectivement une découpe de carton (16) au moyen d'un procédé selon l'une des revendications précédentes, présentant un préformage du film en matière plastique (12) et une liaison consécutive du film de plastique (12) avec la découpe de carton (16), présentant une unité de préformage de film (34) et un dispositif de pressage (76) comportant un mécanisme de poinçonnage (24), dans lequel l'unité de préformage de film (34) présente au moins un outil de poinçonnage (36) comportant un contour extérieur qui correspond au moins sensiblement à un contour intérieur à obtenir de la coque composite en carton et matière plastique (10) produite, dans lequel le mécanisme de poinçonnage (24) présente un autre outil de poinçonnage (80) réalisé de manière complémentaire à l'outil de poinçonnage (36), lequel autre outil de poinçonnage est prévu pour plier et laminer dans une étape de travail commune, et/ou présentant une unité de préformage de film (34) et un dispositif de pressage (76) comportant un mécanisme de pliage (22), dans lequel le mécanisme de pliage (22) est prévu pour plier la découpe de carton (16) pour le formage et le laminage des parois latérales (20), dans lequel le mécanisme de pliage (22) presse les zones partielles (52) de la découpe de carton (16) formant les parois latérales (20) sur le film en matière plastique (12) préformé.

12. Dispositif de fabrication (32) selon la revendication 11,
**caractérisé en ce que** l'unité de préformage de film (34) présente au moins un appareil de chauffage (38) pour un chauffage du film en matière plastique (12) avant et/ou pendant un préformage du film en matière plastique (12).

13. Dispositif de fabrication (32) selon la revendication 12,
**caractérisé en ce que** l'appareil de chauffage (38) est réalisé au moins partiellement d'une seule pièce avec l'outil de poinçonnage (36).
